# EUROPÄISCHE PATENTANMELDUNG

(11) **EP 1 350 963 A2**
(43) Veröffentlichungstag der Anmeldung: **08.10.2003**
(21) Anmeldenummer: 03450076.9
(22) Anmeldetag: 25.03.2003
(51) Int. Cl.: F16B 7/10

(54) **Teleskopische Schiene**

(30) Priorität: 03.04.2002 AT 5212002
(71) Anmelder: Knorr-Bremse Gesellschaft mit beschränkter Haftung, 2340 Mödling (AT)
(72) Erfinder: Weissenbacher, Alfred, 3240 Waidhofen a. d. Ybbs (AT)
(74) Vertreter: Patentanwälte BARGER, PISO & PARTNER

(57) **Zusammenfassung**

Die Erfindung betrifft ein Teleskop mit zumindest zweit C-förmigen und/oder U-förmigen, längsverschieblich zueinander angeordneten, durch Wälzkörper (4) voneinander getrennten Teleskopteilen (2, 3), wobei die Wälzkörper auf Laufbahnen (7, 8) der Teleskopteile laufen und wobei die Wälzkörper gegebenenfalls durch einen Käfig (5) geführt werden.

Die Erfindung ist dadurch gekennzeichnet, dass im Bereich der Laufbahn zumindest eines Teleskopteils ein Anschlag (6) für die Wälzkörper (4) zwischen den Endbereichen der Laufbahn angeordnet ist.

## Beschreibung

Die Erfindung betrifft ein Teleskop mit zumindest zwei Teleskopteilen, die C-förmig und/oder U-förmig ausgebildet und längsverschieblich zueinander angeordnet sind und durch die Längsverschiebung zwischen einer eingefahrenen Position und einer ausgefahrenen Position bewegbar sind, wobei die Teleskopteile durch Wälzkörper, die ihre Verschieblichkeit sichern, voneinander getrennt sind und wobei die, gegebenenfalls durch einen Käfig geführten, Wälzkörper auf Laufbahnen der Teleskopteile entlang Abschnitten laufen, die durch Anschläge, Schrauben od.dgl. begrenzt sind.

Ein derartiges Teleskop in Form einer Führungsschiene ist aus der DE 196 50 698 A1 bekannt. Dabei dienen die Anschläge zur Begrenzung der Beweglichkeit der Teleskopteile zueinander und verhindern so den Zerfall des Teleskops, da sie aber in die Laufbahn der Wälzkörper ragen, verhindern sie auch deren Austritt aus dem Teleskop am Ende der Laufbahn.

Aus der US 1,963,220 A ist von einem Ladenauszug eine ähnlich aufgebaute Konstruktion bekannt, aus der US 4,089,568 A und der JP 03-169 755 A sind ebenfalls ähnliche Vorrichtungen bekannt. In allen diesen Fällen dienen die Anschläge dazu, die Wälzkörper am Verlassen des Teleskops zu hindern und befinden sich daher im wesentlichen am Ende der Laufbahn bzw. der Laufbahnen.

Kein Teleskop, sondern einen Schlitten, betrifft die US 4,556,263 A. Dabei ist der untere Teil fest, beispielsweise in Fahrrichtung in einem Fahrzeug, montiert, und der obere Teil, der einen Sitz trägt, kann von einer Position, in der er teilweise hinter dem unteren Teil liegt, bis in eine Position, in der er teilweise vor dem unteren Teil liegt, verfahren werden. Dabei haben Anschläge, die von jedem der Schlittenteile in die Laufbahn der Wälzkörper ragen, eine besondere Aufgabe: Sie sollen über die Wälzkörper die Beweglichkeit der Schlittenteile, die das Verschieben des Sitzes ermöglichen, begrenzen. Bei derartigen Schlitten ist ein direkter Anschlag zwischen den beiden Schlittenteilen wegen des beidseitigen Überlaufens des oberen Teils über den unteren Teil nicht gut möglich. Um die zerstörerische, stoßende, Belastung, die jedesmal auf die Wälzkörper wirkt, zu vermindern, ist ein federndes Element zwischen den Wälzkörpern vorgesehen. Trotz der relativ seltenen Stöße erfolgen diese mit solcher Kraft, dass diese Maßnahmen notwendig sind.

Allgemein sind Teleskope im Stand der Technik seit langem bekannt. Ihre ursprüngliche und auch heute noch hauptsächlichste Verwendung zielt darauf ab, stabartige Gebilde bei Bedarf verlängern zu können, um an der Spitze befindliche Gegenstände weit von der Basis entfernen zu können. Typische Anwendungsgebiete sind Stative für Geräte aller Art, Ausleger von Kranen, Leitern, Angelruten und vieles anderes mehr. Derartige Aufgabengebiete erlauben es, die einzelnen Bestandteile des Teleskops hohlzylindrisch (aber nicht notwendigerweise mit kreisförmigem Querschnitt) auszubilden und die einzelnen Bestandteile ineinander anzuordnen. Durch diese Ausbildung als geschlossenes Hohlprofil erreicht man eine große Steifigkeit und dies ermöglicht wiederum in vielen Anwendungsgebieten, dass die teleskopierbaren Teile unmittelbar aneinander gleiten, ohne dass Wälzkörper zwischen diesen Teilen vorgesehen wären.

Bei teleskopierbaren Trag- oder Halteschienen, wie sie für die eingangs erwähnte Aufgabe verwendet werden, ist es nun unvermeidbar, dass das Teleskop während seiner Einschubbewegung bzw. seiner Ausziehbewegung großen Kräften quer zur Teleskopachse unterworfen ist, wozu noch kommt, dass diese Kräfte dynamischer Natur sind und nicht statischer Natur, so dass die Beanspruchung des Teleskops außerordentlich hoch ist. Dazu kommt noch, dass es durch die Notwendigkeit, einen der Endteile des Teleskops mit dem Wagenkasten zu verbinden (wenn auch beweglich) und am anderen Endteil des Teleskops den Türflügel zu befestigen, nicht möglich ist, diese Teile mit einem geschlossenen Profilquerschnitt zu versehen, sondern dass man gezwungen ist, zumindest alle bis auf einen dieser Profilteile geschlitzt (C-förmig) oder überhaupt nur U-förmig auszubilden.

All dies führt dazu, dass es nicht möglich ist, diese Teleskopteile unmittelbar aneinander abzustützen, sondern dass es notwendig ist, Wälzkörper vorzusehen, um die Abnutzung, die bei der gleitenden Reibung auftritt, zu verhindern. Durch die Verwendung dieser Wälzkörper ergeben sich aber Schwierigkeiten, die den durch die Verwendung der Wälzkörper beseitigten Schwierigkeiten an Komplexität und Beeinträchtigung des Funktionierens des Teleskops kaum nachstehen:

Die Wälzkörper werden in Käfigen geführt, die im wesentlichen den Querschnitt aufweisen, den der Spalt zwischen zwei benachbarten Teleskopteilen aufweist, somit im wesentlichen U-förmigen Querschnitt. Durch diesen U-förmigen Querschnitt ist es notwendig, den Spalt so breit auszuführen, dass für den Käfig genug Platz bleibt. Dies führt dazu, dass die einzelnen Stege (eigentlich deren Mittelebenen) einen größeren Abstand voneinander aufweisen als es von der Bauweise des Teleskops an sich notwendig wäre, und das führt wiederum zu Beul- und Biegemomenten durch die die Deformation der einzelnen Teleskopteile vergrößert wird.

Zu all dem kommt noch, dass aus Kosten- und Platzgründen als Wälzkörper praktisch nur Kugeln in Frage kommen, die in V-förmigen Nuten laufen, die an den Innenseiten der Schenkel des äußeren Teleskopteiles und der Außenseite der Schenkel des benachbarten inneren Teleskopteiles angeordnet sind. Selbst, wenn es zu praktisch keiner Deformation der Teleskopteile käme, wäre das Abrollen der Kugeln unter diesen Umständen - Berührung an vier Punkten der Kugeloberfläche - ohne Gleiten an zumindest einem der Berührungspunkte, nicht möglich. In Verbindung mit den oben geschilderten Deformationen und Schlägen und Vibrationen kommt es zu schleifenden Bewegungen der Wälzkörper, die zu extremen Verschleiß sowohl der Rollbahnen als auch der Wälzkörper führen. Dieser Verschleiß kann solche Formen annehmen, dass bei Fahrzeugtüren mit derartigen Teleskopen im geschlossenen Zustand der Tür während der Fahrt die Kugeln je nach Beschleunigungs- oder Verzögerungszustand des Fahrzeuges in den Rillen entlang rollen, da die Bahnen und/oder Kugeln soweit abgerieben sind, dass sie völlig locker sitzen. Von einem gleichmäßigen Tragen der Kugeln kann dabei überhaupt nicht mehr die Rede sein. Die Bewegung der Teleskope wird schwergängig und unsicher. Es kommt auch dazu, dass durch die Beanspruchungen die Käfige zerrieben werden, so dass man bei Inspektionen der Türen einzelne, frei rollende Kugeln und kaum eine Spur eines Käfigs mehr findet.

All dies führt dazu, dass die Lebensdauer solcher Teleskope völlig unbefriedigend ist und dass ihre Verwendung kostspielig und durch die Unzuverlässigkeit auch organisatorisch problematisch ist.

Es ist das Ziel der Erfindung, ein Teleskop der eingangs genannten Art anzugeben, dass die genannten Nachteile nicht aufweist und dass insbesondere eine verbesserte Gängigkeit, Zuverlässigkeit und Lebensdauer hat, ohne dass seine Herstellungs- und/oder Wartungskosten sich erhöhen.

Erfindungsgemäß werden diese Ziele dadurch erreicht, dass im Bereich der Bewegungsbahn der Wälzkörper zwischen den Endbereichen der Laufbahn ein Anschlag vorgesehen ist. Durch diesen, im Abstand vom Ende der Laufbahn angeordneten Anschlag wird in der eingeschobenen Position des Teleskops verhindert, dass die Wälzkörper über ihre bestimmungsgemäße Endposition hinaus gelangen können. Der optimale Abstand des Anschlages vom Ende der jeweils betrachteten Laufbahn hängt, wie weiter unten ausführlich dargelegt wird, vom Verhältnis der Länge der Teleskopteile zur Länge des Auszugsweges ab und beträgt bei "klassischem" Aufbau, nämlich praktisch voll ineinander schiebbaren Teleskopteilen und größtmöglichem Auszugweg, ein Drittel der Länge der Teleskopteile.

Auf diese Weise erreicht man, dass bei jedem Schließen der Tür eine Positionierung der Wälzkörper stattfindet, die sicherstellt, dass sich beim Öffnen der Tür die Wälzkörper in dem Abschnitt zwischen den benachbarten Teleskopteilen befinden, in dem sie für die Übertragung der Kräfte benötigt werden. Die Erfindung beruht auf der Erkenntnis, dass für die Lebensdauer des Teleskops hauptsächlich die im geschlossenen Zustand der Tür, somit zumeist während der Fahrt des Schienenfahrzeuges, erfolgende Bewegung der Wälzkörper aus ihrem Tragabschnitt hinaus, schädlich ist.

Es ist der Anschlag so auf dem jeweiligen Teleskopteil vorzusehen, dass beim Schließen der Tür keine Längskräfte zwischen den Teleskopteilen über die Wälzkörper übertragen werden, diese müssen mit geringem, aber genügendem Spiel in ihrer bestimmungsgemäßen Lage gehalten werden. Als Begrenzung für die Bewegung der Teleskopteile zueinander kann ein eigener Anschlag und/oder die Schließendlage des Türblattes dienen. Trotzdem kann der Anschlag für die Wälzkörper elastisch ausgebildet sein, um Stöße und die damit verbundenen Geräusche zu vermeiden.

Da sich die Wälzkörper um den halben Weg der Verschiebung der ihnen zugeordneten Teleskopteile verlagern, ist üblicherweise, bei voller kinematischer Ausnutzung der Länge der Teleskopteile, der gesamte Verschiebeweg funktionell gedrittelt: Im voll ausgezogenen Zustand befinden sich die Wälzkörper in dem Bereich, in dem die Teleskopteile einander Überlappen. Dieser Bereich hat eine Länge von einem Drittel des überlappenden Bereiches der beiden Teleskopteile. Im voll eingeschobenen Zustand haben sich die Teleskopteile um zwei Drittel der Länge des überlappenden Bereiches verschoben, die Wälzkörper demgemäß um ein Drittel und befinden sich nun im mittleren Drittel, das sie im wesentlichen zur Gänze belegen.

Die Anschläge sind so vorzusehen, dass die Wälzkörper während der Fahrt des Fahrzeuges, wenn das Teleskop in der voll eingeschobenen Position ist, nicht aus diesem mittleren Drittel der Länge des Teleskops wandern können.

In einer Ausgestaltung der Erfindung ist es vorgesehen, für die Wälzkörper statt eines Käfigs mit C-förmigem Querschnitt zwei getrennte Käfige für die beiden Laufbahnbereiche zu verwenden und dafür die Stege der Teleskopteile näher aneinander anzuordnen und so die Torsions- und Beulkräfte zu verringern. Es hat sich gezeigt, dass durch die regelmäßige Positionierung der Wälzkörper auf die Kopplung der beiden an sich unabhängigen Wälzkörpergruppen verzichtet werden kann, ohne dass dadurch die Lebensdauer des Teleskops verkürzt wird.

Die Erfindung wird im folgenden an Hand der Zeichnung näher erläutert. Dabei zeigt
die Fig. 1 ein erfindungsgemäß ausgebildetes Teleskop in voll ausgefahrener Stellung,
die Fig. 2 das Teleskop der Fig. 1 in einer teilweise eingefahrenen Stellung,
die Fig. 3 das Teleskop der Fig. 1 in voll eingefahrener Lage und
die Fig. 4 einen Schnitt durch ein erfindungsgemäßes Teleskop, ähnlich dem der Fig. 1 bis 3, allerdings nicht zweiteilig, sondern dreiteilig ausgebildet.

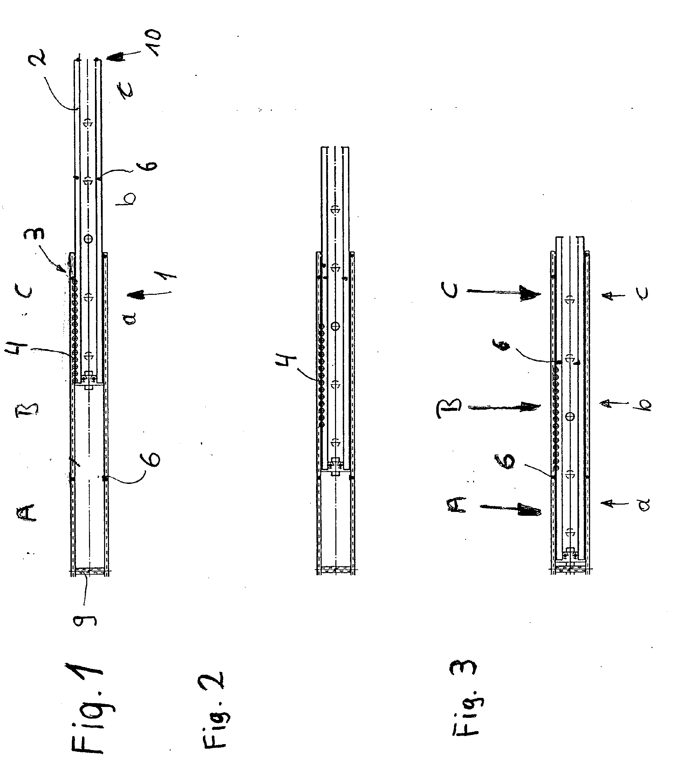

Die Fig. 1 bis 3 zeigen ein in seiner Gesamtheit mit 1 bezeichnetes Teleskop. Dieses besteht im wesentlichen aus einer inneren Teleskopschiene 2 und einer äußeren Teleskopschiene 3. Die beiden Schienen gleiten nicht aneinander, sondern werden von Wälzkörpern 4 geführt und gehalten, so dass im regulären Betrieb bei der Einschubbewegung, so wie bei der Ausziehbewegung, keine Gleitreibung, sondern nur Rollreibung auftritt.

Aus Fig. 1 ist ersichtlich, dass die Wälzkörper 4 in der am weitesten ausgezogenen Stellung der beiden Teleskopteile 2, 3 sich im verbleibenden, von beiden Teleskopteilen eingenommenen Abschnitt befinden, so dass die über das Teleskop zu übertragenden Kräfte über diese Wälzkörper in diesem Abschnitt übertragen werden.

Nur der Vollständigkeit halber soll darauf hingewiesen werden, dass auch schon im Stand der Technik im vollkommen offenen Zustand des Teleskops durch diese Begrenzung des Platzes für die Wälzkörper automatisch eine gewisse Justierung der Wälzkörper erfolgt, da ja die benachbarten Teleskopteile soweit ausgefahren werden, dass gerade noch die Wälzkörper in ihrem Überlappungsbereich Platz haben. Diese Justierung ist allerdings ohne Einfluß auf die Lebensdauer, da es bei offener Tür nicht zu Rüttelbewegungen, Beschleunigungen, Verzögerungen oder Vibrationen kommt und, selbst wenn es dazu käme, die Wälzkörper keinen Platz für eine Verlagerung hätten.

Wie aus Fig. 2 ersichtlich, bewegen sich beim Einschieben des Teleskops die Wälzkörper 4 mit der halben Geschwindigkeit der beiden Teleskopteile zueinander, so dass sie stets vom offenen Ende des äußeren Teleskops ebenso weit entfernt sind wie vom geschlossenen Ende des inneren Teleskops.

Bei Fortführung dieser Bewegung erreicht man schließlich die in Fig. 3 dargestellte Lage: Die beiden Teleskopteile 2, 3 sind zur Gänze ineinander geschoben, die Wälzkörper 4 befinden sich zur Gänze im mittleren Drittel bzw. im mittleren Bereich, da die Wälzkörper auch über einen nur kürzeren Abschnitt der Länge der Teleskopteile vorgesehen sein können, wenn dies die zu übertragenden Kräfte erlauben.

In Fig. 3 sind für jede der beiden Teleskopschienen drei Abschnitte eingetragen, nämlich die Abschnitte A, B, C für die äußere Teleskopschiene 3 und die Abschnitte a, b, c für die innere Teleskopschiene 2. Wenn man die Fig. 1 mit der Fig. 3 vergleicht, so erkennt man, dass bei der äußeren Teleskopschiene sich im Bereich A niemals Wälzkörper befinden; auf ähnliche Weise befinden sich bei der inneren Teleskopschiene 2 im Bereich c niemals Wälzkörper. Die Wälzkörper befinden sich, je nach der Stellung der Teleskopteile zueinander, immer nur in den beiden anderen Bereichen: in den Bereichen B und C der äußeren Teleskopschiene 3 bzw. in den Bereichen a und b der inneren Teleskopschiene 2.

Dabei entspricht die Länge der Abschnitte A und C und somit auch die Länge der Abschnitte a und c jeweils der halben maximalen Länge des Auszuges der beiden Teleskopteile zueinander und die Länge des Abschnittes B bzw. b der Länge zwischen dem "vordersten" und dem "hintersten" Wälzkörper, dem hier so genannten "Wälzkörperbesatz". All diese Längen sind nicht mathematisch zu verstehen, im Sinne von "vom Mittelpunkt zum Mittelpunkt", sondern praktisch, d.h. unter Berücksichtigung des Käfigs, der Abschlußteile, der Überlängen, etc.. So ist es beispielsweise möglich, dass die äußere Teleskopschiene 3 auf der geschlossenen Seite länger ausgebildet ist als dargestellt, wodurch die Länge des Abschnittes A länger als der halbe Auszug wäre, es ist die Definition der Lage und Längen der Abschnitte letzten Endes nur über die Funktion des Teleskops eindeutig definierbar.

Es wurde bisher an Hand der drei Figuren die Funktionsweise und Kinematik eines funktionierenden Teleskops mit Wälzkörpern erläutert, bei den eingangs geschilderten Problemfällen kommt es nun durch Beschädigungen der Laufbahnen und/oder der Wälzkörper dazu, dass in der geschlossenen Lage des Teleskops, wie sie die Fig. 3 zeigt, während der Fahrt des Schienenfahrzeuges die Wälzkörper 4 sich relativ frei entlang der Wälzbahnen bewegen können und so eine völlig undefinierte Lage (in Richtung der Teleskopachse) zwischen den Teleskopteilen einnehmen. Wenn sodann nach Stillstand des Fahrzeuges der Türantrieb betätigt wird, kommt es bei völlig undefinierten Anordnungen der Wälzkörper (besonders wenn der zwischen den Wälzkörpern vorgesehene Käfig bereits zerstört ist) zum mehr oder weniger gewaltsamen Auseinanderschieben der Teleskopteile, wobei jeder Wälzkörper, der sich zu Beginn außerhalb des Bereiches B (entspricht definitionsgemäß b) befindet, zu Beginn oder zu Ende der Ausziehbewegung der Gleitreibung unterliegt.

Zu all dem kommt noch, dass durch die resultierende extreme Abnutzung die geometrische Genauigkeit des Teleskops drastisch verschlechtert wird, was sich wiederum auf den gesamten Türantrieb schädlich auswirkt.

Die Erfindung sieht nun vor, auf den Laufbahnen der äußeren Teleskopschiene 3 im Bereich des Übergangs zwischen den Abschnitten A und B und auf den Laufbahnen der inneren Teleskopschiene 2 im Bereich des Überganges zwischen den Abschnitten b und c Anschläge vorzusehen, über die die Wälzkörper 4 nicht zerstörungsfrei gelangen können.

Die Art der Anschläge kann die unterschiedlichste Form annehmen: Es können Wurmschrauben sein, die von außen in den Bereich der Laufbahnen ragen, es können richtiggehende Stoppvorrichtungen mit speziellen Anlegeflächen für die Wälzkörper sein, es können schließlich auch in die Bahnen geschraubte, geklemmte, genietete, geklebte, gelötete oder geschweißte Hindernisse sein.

Es muß noch erwähnt werden, dass auf völlig unerwartete Weise die Anbringung derartiger Anschläge nur in der äußeren Teleskopschiene 3 schon ausreicht, um die Lebensdauer des gesamten Teleskops merklich zu erhöhen. Dies bedeutet, dass es bei dem in den Fig. 1 bis 3 dargestellten zweiteiligen Teleskop ausreicht, im Bereich der Laufbahnen des äußeren Teleskops 3 zwischen den Abschnitten A und B jeweils einen derartigen Anschlag vorzusehen. Selbstverständlich wird die Wirkung weiter wesentlich verbessert, wenn auch, wie oben erläutert, am Übergang der Abschnitte b, c der inneren Teleskopschiene 2 ein derartiger Anschlag vorgesehen ist.

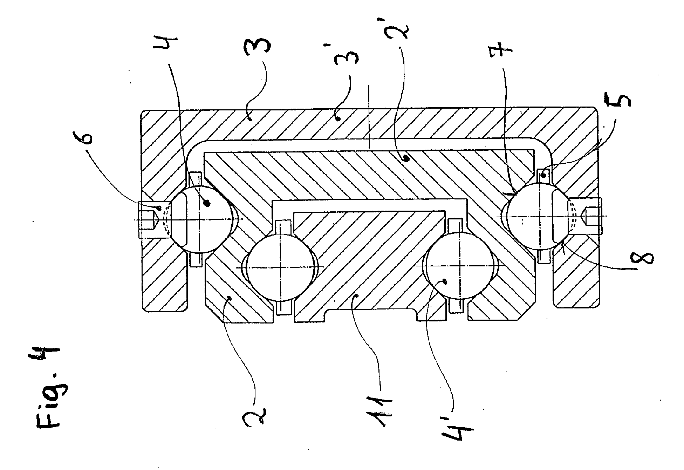

Die Fig. 4 zeigt eine Ausgestaltung der Erfindung, an Hand eines dreiteiligen Teleskops in einem Schnitt normal zur Teleskopachse. Im folgenden wird der äußerste Teleskopteil nach wie vor mit 3 und der ihm benachbarte (eigentlich mittlere) Teleskopteil als innerer Teleskopteil 2 bezeichnet, der innerste oder zentrale Teleskopteil 11, der über eine andere Querschnittsform als der äußere und der innere Teleskopteil verfügt, ist hauptsächlich zur Erläuterung der verschiedenen Möglichkeiten und Ausgestaltungen der Erfindung abgebildet.

Wie aus Fig. 4 deutlich ersichtlich ist, laufen die Wälzkörper, fast ausschließlich handelt es sich dabei um Kugeln, in V-förmigen Nuten mit Flanken 7 und 8. Dies führt dazu, dass jeder Wälzkörper 4 an vier Punkten von vier Tangentialebenen berührt wird, was statisch überbestimmt ist und zu einem Gutteil für die erwähnten Probleme und Nachteile verantwortlich ist. Als zusätzliches Problem kommt noch dazu, dass, bezogen auf die Wälzachse des Wälzkörpers 4, die Berührungspunkte des Wälzkörpers mit den Tangentialebenen alle den gleichen Radius aufweisen müssen, da ansonsten ein reines Rollen des Wälzkörpers auf den beiden Laufbahnen unmöglich ist.

Da darüber hinaus die einzelnen Wälzkörper 4 noch über einen Käfig 5 in ihrer Lage zueinander gehalten werden, muß diese Bedingung nicht nur Wälzkörper für Wälzkörper, sondern simultan und während der gesamten Bewegung für alle Wälzkörper gleichzeitig erfüllt sein, was ausgeschlossen ist.

Die Folge dieser unmöglich einzuhaltenden Randbedingungen ist nun, dass es zum Gleiten zwischen den Wälzkörpern und den Laufbahnen, damit zur Gleitreibung und somit zu Deformationen und/oder zum Abrieb kommt. Diese Deformationen führen aber nicht zu einer Angleichung und damit Verringerung der Probleme, sondern zu einer Vergrößerung und Aufschaukelung.

Wie oben erwähnt, kann diesen Problemen durch die erfindungsgemäßen Anschläge 6 begegnet werden, zwei davon, die der äußeren Teleskopschiene 3, sind in Fig. 4 dargestellt. Bei diesen dargestellten Beispielen handelt es sich um eingeschraubte Anschläge doch ist es, wie oben erwähnt, möglich, eine beliebige andere Form für die Anschläge zu wählen, insbesondere wenn ein elastisches Abbremsen der auf den Anschlag auflaufenden Wälzkörper sichergestellt werden soll.

Aus der Fig. 4 ist auch ersichtlich, dass es durch die Erfindung möglich wird, die beiden Reihen von Wälzkörpern zwischen zwei Teleskopteilen jeweils mit einem eigenen Käfig 5 zu versehen und darauf zu verzichten, die beiden Käfige 5 im Spalt zwischen dem äußeren Teleskopteil 3 und dem inneren Teleskopteil 2 miteinander zu verbinden. Auf diese Weise wird es möglich, die Stege 3' und 2' näher zueinander zu rücken und so die Belastung der Teleskopteile auf Beulung bzw. Biegung zu verringern, da die Lasten näher zur Teleskopachse rücken und damit mit geringerem Hebelarm angreifen.

In Fig. 4 ist auch ein zentraler Teleskopteil 11 dargestellt, die Verhältnisse zwischen dem inneren Teleskopteil 2 und dem zentralen Teleskopteil 11 entsprechen denen zwischen dem äußeren Teleskopteil 3 und dem inneren Teleskopteil 2 mutatis mutandis, so dass es hier keiner besonderen Erörterung bedarf. Es ist aus diesem Grund auch bei diesen beiden Teleskopteilen (so wie beim inneren Teleskopteil 2) kein Anschlag eingezeichnet, diese Anschläge sind auf genau die gleiche Weise anzubringen, wie in der Fig. 4 an Hand des äußeren Teleskopteils 3 dargestellt.

Es ist, insbesondere bei zweiflügeligen Türen, selbstverständlich möglich, einen einzigen, durchgehenden äußeren Teleskopteil vorzusehen, in dem zwei innere Teleskopteile verschiebbar angeordnet sind, jeweils nach einer der beiden Seiten ausziehbar. Durch diese Verdoppelung ändert sich aber nichts an der Funktionsweise der erfindungsgemäßen Anschläge, auch die genannten Positionierungen und Längenverhältnisse bleiben die gleichen wie bei den erläuterten Beispielen, es ist nur von jeweils einer der beiden Teleskopseiten auszugehen.

## Patentansprüche

**1.** Teleskop mit zumindest zwei C-förmigen und/oder U-förmigen, die längsverschieblich zueinander angeordnet sind und durch die Längsverschiebung zwischen einer eingefahrenen Position und einer ausgefahrenen Position bewegbar sind, wobei die Teleskopteile (2, 3) durch Wälzkörper (4), die ihre Verschieblichkeit sichern, voneinander getrennten sind, wobei die Wälzkörper auf Laufbahnen (7, 8) der Teleskopteile laufen und wobei die, gegebenenfalls durch einen Käfig (5) geführten Wälzkörper (4) auf Laufbahnen der Teleskopteile (2, 3) entlang Abschnitten laufen, die durch Anschläge, Schrauben od.dgl. begrenzt sind, **dadurch gekennzeichnet, dass** zumindest ein Anschlag (6) für die Wälzkörper (4) im Abstand von den Endbereichen der Laufbahn angeordnet ist.

**2.** Teleskop nach Anspruch 1, **dadurch gekennzeichnet, dass** der Anschlag (6) einen Abstand von 20 bis 33 % der maximalen Auszuglänge der benachbarten Teleskopteile (2, 3) vom Ende der Laufbahn aufweist.

**3.** Teleskop nach Anspruch 2, **dadurch gekennzeichnet, dass** der Anschlag (6) einen Abstand von 25 bis 30 % der maximalen Auszuglänge der benachbarten Teleskopteile (2, 3) vom Ende der Laufbahn aufweist.

**4.** Teleskop nach einem der voranstehenden Ansprüche, **dadurch gekennzeichnet, dass** der Anschlag (6) aus einer in den Teleskopteil geschraubten Schraube besteht.

**3.** Teleskop nach einem der voranstehenden Ansprüche, **dadurch gekennzeichnet, dass** der Anschlag (6) elastisch ausgebildet ist.

**4.** Teleskop nach einem der voranstehenden Ansprüche, **dadurch gekennzeichnet, dass** der äußere Teleskopteil (3) drei Abschnitte (A, B, C) aufweist, wobei sich die Wälzkörper (4) im eingeschobenen Zustand des Teleskops im Abschnitt (B) und im ausgezogenen Zustand im Abschnitt (C) befinden, dass der Anschlag (6) am Ende des Abschnitts (B) im Bereich des Überganges zum Abschnitt (A) angeordnet ist, und dass die Länge des Abschnittes (C) im wesentlichen dem halben maximalen Auszug und die Länge des Abschnittes (B) im wesentlichen der Länge des Wälzkörperbesatzes entspricht.

**5.** Teleskop nach einem der voranstehenden Ansprüche, **dadurch gekennzeichnet, dass** der innere Teleskopteil (2) drei Abschnitte (a, b, c) aufweist, wobei sich die Wälzkörper (4) im eingeschobenen Zustand des Teleskops im Abschnitt (b) und im ausgezogenen Zustand im Abschnitt (a) befinden, dass der Anschlag (6) am Ende des Abschnittes (b) im Bereich des Überganges zum Abschnitt (c) angeordnet ist, und dass die Länge des Abschnittes (a) im wesentlichen dem halben maximalen Auszug und die Länge des Abschnittes (b) im wesentlichen der Länge des Wälzkörperbesatzes entspricht.

**6.** Teleskop nach einem der voranstehenden Ansprüche, **dadurch gekennzeichnet, dass** den Wälzkörpern (4) einer Laufbahn (7, 8) jeweils ein eigener Käfig (5) zugeordnet ist.

**7.** Teleskop nach einem der voranstehenden Ansprüche, **dadurch gekennzeichnet, dass** es aus drei Teleskopteilen (3, 2, 11) besteht, dass der äußere Teleskopteil (3) und der innere Teleskopteil (2) einen C-förmigen oder U-förmigen Querschnitt aufweisen und dass der zentrale Teleskopteil (11) im wesentlichen einen rechteckförmigen Querschnitt aufweist.
